# EUROPEAN PATENT APPLICATION

(11) **EP 2 924 593 A1**
(43) Date of publication of application: **30.09.2015**
(21) Application number: 15160361.0
(22) Date of filing: 23.03.2015
(51) Int. Cl.: G06F 17/30

(54) **METHOD AND APPARATUS FOR CONSTRUCTING DOCUMENTS**

(30) Priority: 25.03.2014 KR 20140034896
(71) Applicant: Samsung Electronics Co., Ltd, Gyeonggi-do 443-742 (KR)
(72) Inventor: Kim, Geonsoo, 443-742 Gyeonggi-do (KR); Sung, Hyunjo, 443-742 Gyeonggi-do (KR)
(74) Representative: Nederlandsch Octrooibureau

(57) **Abstract**

A method and electronic device for of constructing documents utilizing code from existing documents. The method includes displaying a first document on a display screen; selecting, by a processor, a section of the first document in response to an input; extracting code corresponding to the section from the first document; constructing, by the processor, a second document based on the code; and displaying the second document on the display screen.

## Description

### BACKGROUND

### 1. Field of the Disclosure

The present disclosure relates to electronic devices, and more particularly to a method and apparatus for constructing documents.

### 2. Description of the Related Art

Recent electronic devices have been developed as multimedia processing devices with a variety of combined functions, such as taking photographs or videos, playing back music files or video files, supporting games, broadcasting, supporting wireless Internet, etc. With the development of functions related to electronic devices, the hardware or software technologies have also been developed to provide more convenient services to users. Users can easily access webpages on portal sites, blogs, shopping malls, etc., over the wireless Internet, and can search for corresponding information content.

Information content is output through a webpage of a relatively long length or a number of webpages on the corresponding windows. As an example of the information content outputting methods, portal sites output a number of contents, such as news, advertisements, emails, etc., on a single webpage of a relatively long length. As another example, shopping mall websites output items and their details, arranged based on a preset condition, on a single webpage.

In order to resolve problems caused as information content is output on a single webpage, conventional systems apply a bookmarking function to webpages. Bookmarking functions allow users to set an identifier in a webpage for later retrieval.

However, conventional bookmarking systems are disadvantageous because two or more webpages to which users have added bookmarks cannot be simultaneously output. In addition, although a user has added a bookmark to part of content in a webpage for later retrieval, conventional bookmaking systems cannot output the entire webpage. In that case, if the webpage to which a bookmark has been added is created relatively long, the user must scroll it until the bookmarked content appears on the screen.

### SUMMARY

According to aspects of the disclosure, a method is provided comprising: displaying a first document on a display screen; selecting, by a processor, a section of the first document in response to an input; extracting code corresponding to the section from the first document; constructing, by the processor, a second document based on the code; and displaying the second document on the display screen.

According to aspects of the disclosure, an electronic device is provided comprising a display screen and a processor configured to: display a first document on the display screen; select a section of the first document in response to an input; extract code corresponding to the section from the first document; construct a second document based on the code; and display the second document on the display screen.

According to aspects of the disclosure, a non-transitory recording medium is provided that stores processor-executable instructions which when executed by a processor cause the processor to perform a method comprising: displaying a first document on a display screen; selecting a section of the first document in response to an input; extracting code corresponding to the section from the first document; constructing a second document based on the code; and displaying the second document on the display screen.

### BRIEF DESCRIPTION OF THE DRAWINGS

The features and advantages of the disclosure will become more apparent from the following detailed description in conjunction with the accompanying drawings, in which:
FIG. 1 is a block diagram of an example of an electronic device, according to aspects of the disclosure;
FIG. 2 is a block diagram of another example of the electronic device, according to aspects of the disclsoure;
FIG. 3 is a block diagram of an example of a programming module, according to aspects of the disclosure;
FIG. 4 is a block diagram of another example of the programming module, according to aspects of the disclosure;
FIG. 5 is a flowchart of an example of a process for constructing pages, according to aspects of the disclosure;
FIG. 6 is a diagram illustrating an example of a process for constructing pages, according to aspects of the disclosure;
FIG. 7 is a diagram illustrating another example of a process for constructing pages, according to aspects of the disclosure;
FIG. 8 is a diagram illustrating yet another example of a process for constructing pages, according to aspects of the disclosure;
FIG. 9 is a diagram illustrating yet another example of a process for constructing pages, according to aspects of the disclosure;
FIG. 10 is a diagram illustrating yet another example of a process for constructing pages, according to aspects of the disclosure;
FIG. 11 is a diagram illustrating an example of a document structure, according to aspects of the disclosure; and
FIG. 12 is a diagram illustrating yet another example of a process for constructing pages, according to aspects of the disclosure.

### DETAILED DESCRIPTION

In the present disclosure, the term 'electronic document' is defined as a content that information processing systems create in an electric form, which can be stored in storage media or transmitted through communication systems. More specifically, an electronic document refers to any type of document including contents that are created/output/displayed in an electronic form, e.g., text, images, webpages, etc..

In addition, the term 'user pages' are defined as 'pages' constructed according to various aspects of the disclosure.

In addition, for the purpose of clarity and convenience, webpages and user pages will be described, assuming that they are constructed by using Hyper Text Markup Language (HTML). However, it should be understood that webpages and user pages may also be constructed by all types of programing languages that can create webpages as well as HTML, e.g., Cascade Style Sheet (CSS), JavaScript, etc.

Hereinafter, the present disclosure will be described with reference to the accompanying drawings. Although specific embodiments are illustrated in the drawings and related detailed descriptions are discussed in the present specification, the present disclosure may have various modifications and several embodiments. However, various embodiments of the present disclosure are not limited to a specific implementation form and it should be understood that the present disclosure includes all changes and/or equivalents and substitutes included in the spirit and scope of various embodiments of the present disclosure. In connection with descriptions of the drawings, similar components are designated by the same reference numeral.

The term "include" or "may include" which may be used in describing various embodiments of the present disclosure refers to the existence of a corresponding disclosed function, operation or component which can be used in various embodiments of the present disclosure and does not limit one or more additional functions, operations, or components. In various embodiments of the present disclosure, the terms such as "include" or "have" may be construed to denote a certain characteristic, number, step, operation, constituent element, component or a combination thereof, but may not be construed to exclude the existence of or a possibility of addition of one or more other characteristics, numbers, steps, operations, constituent elements, components or combinations thereof.

In various embodiments of the present disclosure, the expression "or" or "at least one of A or/and B" includes any or all of combinations of words listed together. For example, the expression "A or B" or "at least A or/and B" may include A, may include B, or may include both A and B.

The expression "1", "2", "first", or "second" used in various embodiments of the present disclosure may modify various components of the various embodiments but does not limit the corresponding components. For example, the above expressions do not limit the sequence and/or importance of the components. The expressions may be used for distinguishing one component from other components. For example, a first user device and a second user device indicate different user devices although both of them are user devices. For example, without departing from the scope of the present disclosure, a first structural element may be referred to as a second structural element. Similarly, the second structural element also may be referred to as the first structural element.

When it is stated that a component is "coupled to" or "connected to" another component, the component may be directly coupled or connected to another component or a new component may exist between the component and another component. In contrast, when it is stated that a component is "directly coupled to" or "directly connected to" another component, a new component does not exist between the component and another component.

The terms used in describing various embodiments of the present disclosure are only examples for describing a specific embodiment but do not limit the various embodiments of the present disclosure. Singular forms are intended to include plural forms unless the context clearly indicates otherwise.

Unless defined differently, all terms used herein, which include technical terminologies or scientific terminologies, have the same meaning as that understood by a person skilled in the art to which the present disclosure belongs. Such terms as those defined in a generally used dictionary are to be interpreted to have the meanings equal to the contextual meanings in the relevant field of art, and are not to be interpreted to have ideal or excessively formal meanings unless clearly defined in the present description.

An electronic device according to various embodiments of the present disclosure may be a device including a communication function. For example, the electronic device may be one or a combination of a smart phone, a tablet Personal Computer (PC), a mobile phone, a video phone, an e-book reader, a desktop PC, a laptop PC, a netbook computer, a Personal Digital Assistant (PDA), a camera, a wearable device (for example, a Head-Mounted-Device (HMD) such as electronic glasses, electronic clothes, and electronic bracelet, an electronic necklace, an electronic appcessary, an electronic tattoo, and a smart watch.

According to some embodiments, the electronic device may be a smart home appliance having a communication function. The smart home appliance may include at least one of a TeleVision (TV), a Digital Video Disk (DVD) player, an audio player, an air conditioner, a cleaner, an oven, a microwave oven, a washing machine, an air cleaner, a set-top box, a TV box (for example, Samsung HomeSync™, Apple TV™, or Google TV™), game consoles, an electronic dictionary, an electronic key, a camcorder, and an electronic frame.

According to some embodiments, the electronic device may include at least one of various types of medical devices (for example, Magnetic Resonance Angiography (MRA), Magnetic Resonance Imaging (MRI), Computed Tomography (CT), a scanner, an ultrasonic device and the like), a navigation device, a Global Positioning System (GPS) receiver, an Event Data Recorder (EDR), a Flight Data Recorder (FDR), a vehicle infotainment device, electronic equipment for a ship (for example, a navigation device for ship, a gyro compass and the like), avionics, a security device, a head unit for a vehicle, an industrial or home robot, an Automatic Teller Machine (ATM) of financial institutions, and a Point Of Sale (POS) device of shops.

According to some embodiments, the electronic device may include at least one of furniture or a part of a building/structure, an electronic board, an electronic signature receiving device, a projector, and various types of measuring devices (for example, a water meter, an electricity meter, a gas meter, a radio wave meter and the like) including a camera function. The electronic device according to various embodiments of the present disclosure may be one or a combination of the above described various devices. Further, the electronic device according to various embodiments of the present disclosure may be a flexible device. It is apparent to those skilled in the art that the electronic device according to various embodiments of the present disclosure is not limited to the above described devices.

Hereinafter, an electronic device according to various embodiments of the present disclosure will be described with reference to the accompanying drawings. The term "user" used in various embodiments may refer to a person who uses an electronic device or a device (for example, an artificial intelligence electronic device) which uses an electronic device.

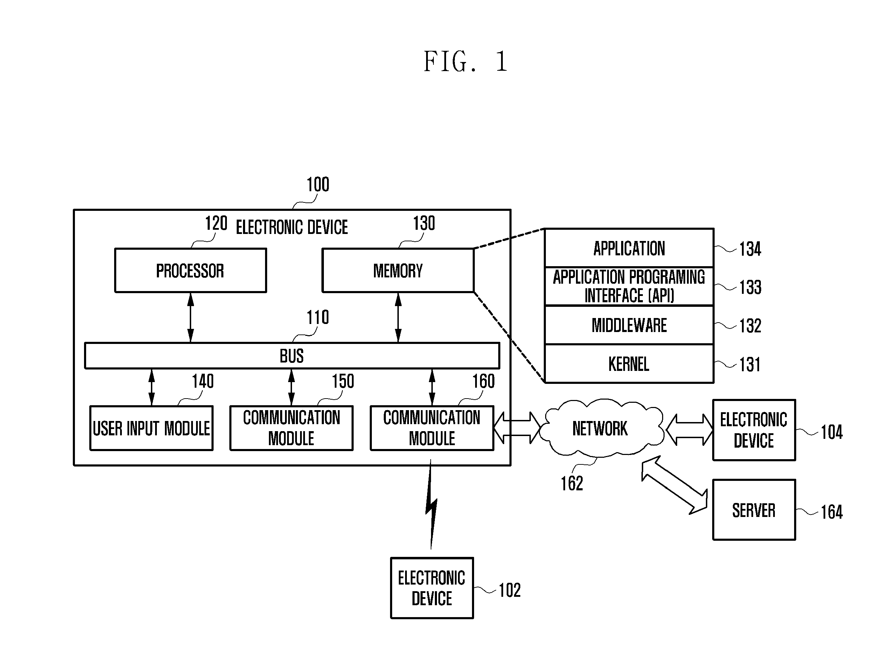

FIG. 1 is a block diagram of an example of an electronic device, according to aspects of the disclosure.

Referring to FIG. 1, the electronic apparatus 100 may include a bus 110, a processor 120, a memory 130, a user input module 140, a display module 150, and a communication module 160.

The bus 110 may be a circuit for interconnecting elements described above and for allowing a communication, e.g. by transferring a control message, between the elements described above.

The processor 120 may include any suitable type of processing circuitry, such as a general purpose processor (e.g., an ARM-based processor), Field-Programmable Gate Array (FPGA), an Application-Specific Integrated Circuit (ASIC), a Digital Signal Processor (DSP), a Programmable Logic Device (PLD), etc. The processor 120 can receive commands from the above-mentioned other elements, e.g. the memory 130, the user input module 140, the display module 150, and the communication module 160, through, for example, the bus 110, can decipher the received commands, and perform operations and/or data processing according to the deciphered commands.

The memory 130 can store commands received from the processor 120 and/or other elements, e.g. the user input module 140, the display module 150, and the communication module 160, and/or commands and/or data generated by the processor 120 and/or other elements. The memory 130 may include programming modules, such as a kernel 131, middleware 132, an Application Programming Interface (API) 133, and an application 134. Each of the programming modules described above may be configured by software, firmware, hardware, and/or combinations of two or more thereof.

The kernel 131 can control and/or manage system resources, e.g. the bus 110, the processor 120 or the memory 130, used for execution of operations and/or functions implemented in other programming modules, such as the middleware 132, the API 133, and/or the application 134. Further, the kernel 131 can provide an interface through which the middleware 132, the API 133, and/or the application 134 can access and then control and/or manage an individual element of the electronic apparatus 100.

The middleware 132 can perform a relay function which allows the API 133 and/or the application 134 to communicate with and exchange data with the kernel 131. Further, in relation to operation requests received from at least one of an application 134, the middleware 132 can perform load balancing in relation to the operation requests by, for example, giving a priority in using a system resource, e.g. the bus 110, the processor 120, and/or the memory 130, of the electronic apparatus 100 to at least one application from among the at least one of the application 134.

The API 133 is an interface through which the application 134 can control a function provided by the kernel 131 and/or the middleware 132, and may include, for example, at least one interface or function for file control, window control, image processing, and/or character control.

The user input module 140 can receive, for example, a command and/or data from a user, and transfer the received command and/or data to the processor 120 and/or the memory 130 through the bus 110. The display module 150 can display an image, a video, and/or data to a user.

The communication module 160 can establish a communication between the electronic apparatus 100 and another electronic devices 102 and 104 and/or a server 164. The communication module 160 can support short range communication protocols, e.g. a Wireless Fidelity (WiFi) protocol, a BlueTooth (BT) protocol, and a Near Field Communication (NFC) protocol, communication networks, e.g. Internet, Local Area Network (LAN), Wire Area Network (WAN), a telecommunication network, a cellular network, and a satellite network, or a Plain Old Telephone Service (POTS), or any other similar and/or suitable communication networks, such as network 162, or the like. Each of the electronic devices102 and 104 may be a same type and/or different types of electronic apparatus.

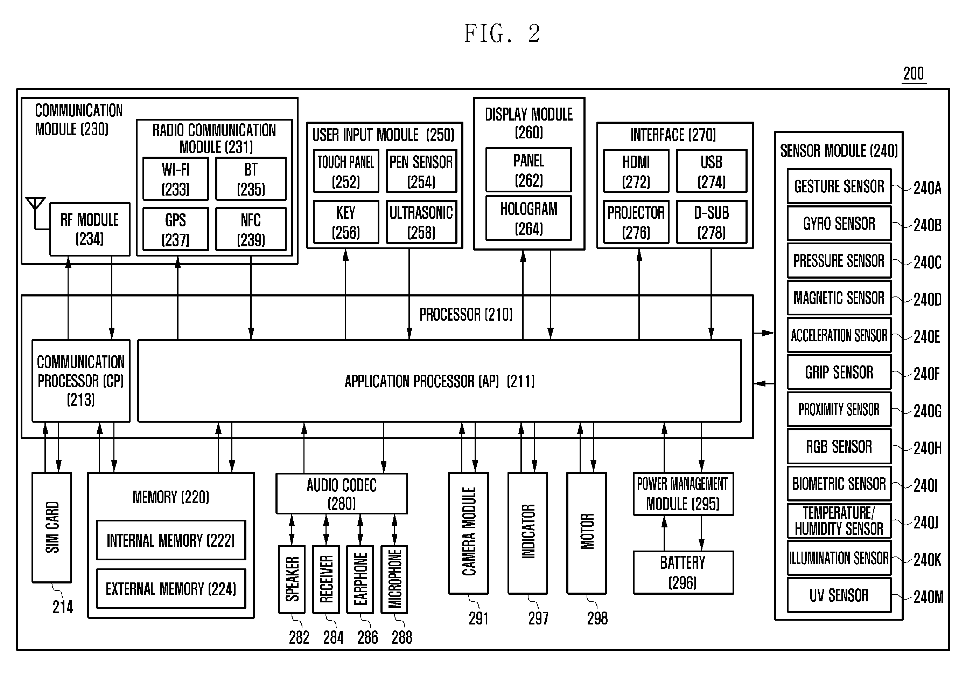

FIG. 2 is a block diagram of another example of the electronic device, according to aspects of the disclosure.

A hardware 200 may be, for example, the electronic apparatus 100 illustrated in FIG. 1.

Referring to FIG. 2, the hardware 200 may include at least one processor 210, a Subscriber Identification Module (SIM) card 214, a memory 220, a communication module 230, a sensor module 240, a user input module 250, a display module 260, an interface 270, an audio codec 280, a camera module 291, a power management module 295, a battery 296, an indicator 297, and a motor 298.

The processor 210 may include at least one Application Processor (AP) 211 and/or at least one Communication Processor (CP) 213. The processor 210 may be, for example, similar to the processor 120 as illustrated in FIG. 1. Although FIG. 2 shows the AP 211 and the CP 213 included in the processor 210, the AP 211 and the CP 213 may be included in different Integrated Circuits (IC) packages, respectively. According to an embodiment, the AP 211 and the CP 213 may be included in a single IC package. The AP 211 can execute an OS or an application program to control a plurality of hardware and/or software elements connected to the AP 211 and perform processing and calculation of various data including the multimedia data. The AP 211 may be implemented by, for example, a System on Chip (SoC). According to an embodiment, the processor 210 may further include a Graphic Processing Unit (GPU) (not illustrated).

The CP 213 can perform functions of managing a data link and/or converting a communication protocol in communication between an electronic apparatus, e.g. the electronic apparatus 100, including the hardware 200 and/or another electronic apparatus connected through a network to the electronic apparatus. The CP 213 may be implemented by, for example, an SoC. According to an embodiment, the CP 213 may perform at least a part of a multimedia control function. The CP 213 can perform identification and authentication of a terminal in a communication network by using, for example, a user identification module, e.g. the SIM card 214. Further, the CP 213 can provide services, such as a voice communication service, a video communication service, a short message service, and a packet data service, to a user.

Further, the CP 213 can control data transmission and/or reception of the communication module 230. Although the elements including the CP 213, the power management module 295, and the memory 220 are illustrated as being separate from the AP 211 in FIG. 2, the AP 211 may be implemented to include at least some, e.g. the CP 213, of the aforementioned elements according to an embodiment.

According to an embodiment, the AP 211 or the CP 213 may load a command and/or data received from at least one of a non-volatile memory and/or other elements connected thereto in a volatile memory and may then process the same. Further, the AP 211 or the CP 213 may store data received from and/or generated by at least one of the other elements in a non-volatile memory.

The SIM card 214 may be a card implementing a SIM and may be inserted in a slot formed at a particular position of an electronic apparatus. The SIM card 214 may include specific identification information, e.g. an Integrated Circuit Card IDentifier (ICCID), and/or subscriber information, e.g. an International Mobile Subscriber Identity (IMSI).

The memory 220 may include an internal memory 222 and/or an external memory 224. The memory 220 may be, for example, similar to the memory 130 as illustrated in FIG. 1. The internal memory 222 may include at least one of a volatile memory, e.g., a Dynamic Random Access Memory (DRAM), a Static RAM (SRAM), a Synchronous Dynamic RAM (SDRAM), or the like, and/or a non-volatile memory, e.g., a One Time Programmable Read Only Memory (OTPROM), a Programmable ROM (PROM), an Erasable and Programmable ROM (EPROM), an Electrically Erasable and Programmable ROM (EEPROM), a mask ROM, a flash ROM, a NAND flash memory, a NOR flash memory, or the like. According to an embodiment, the internal memory 222 may have a form of a Solid State Drive (SSD). The external memory 224 may further include a flash drive, for example, a Compact Flash (CF) drive, a Secure Digital (SD) drive, a Micro Secure Digital (Micro-SD) drive, a Mini Secure Digital (Mini-SD) drive, an extreme Digital (xD) drive, a memory stick, and/or the like.

In an embodiment of the present disclosure, when a user page is constructed based on a user's one or more input touches, the memory 220 may temporarily store code data edited by each of the user's input touches. The memory 220 may also store information about user pages that have been previously constructed in order to construct new user pages. For example, when a new user page is constructed under the control of the processor 120, including previously constructed user pages, the memory 220 may provide the previously constructed user pages to the processor 120.

The communication module 230 may include a wireless communication module 231 and/or a Radio Frequency (RF) module 234. The communication module 230 may be, for example, similar to the communication module 160 as illustrated in FIG. 1. The wireless communication module 231 may include, for example, a WiFi module 233, a BT module 235, a GPS receiving module 237, and/or a NFC module 239. For example, the wireless communication module 231 can provide a wireless communication function by using a wireless frequency. Additionally or alternatively, the wireless communication module 231 may include a network interface, e.g., a LAN card, and/or a modem for connecting the hardware 200 with a network,(e.g., Internet, a LAN, a WAN, a telecommunication network, a cellular network, a satellite network, a Plain Old Telephone Service (POTS), and/or the like. The NFC module 239 may include a connection node for connection to an NFC antenna.

In an embodiment of the present disclosure, the wireless communication module 231 receives information in webpages. For example, when a user executes a web browser to access a website by the Uniform Resource Locator (URL), the wireless communication module 231 may receive a source code of the accessed webpage from the webpage providing server, etc., such as code data configuring frames of the currently displayed webpage, code data about an iframe within a frame of a webpage, etc.

The RF module 234 can perform data transmission/reception, for example, transmission and/or reception of an RF signal and/or a paged electronic signal. The RF module 234 may include, for example, a transceiver, a Power Amplifier Module (PAM), a frequency filter, a Low Noise Amplifier (LNA), and/or the like, which are not illustrated in FIG. 2. Further, the RF module 234 may further include a component for transmitting and/or receiving an electromagnetic wave in a free space in a wireless and/or wired communication, for example, a conductor, a conductive wire, and/or the like.

The sensor module 240 may include, for example, at least one of a gesture sensor 240A, a gyro sensor 240B, an atmospheric pressure sensor 240C, a magnetic sensor 240D, an acceleration sensor 240E, a grip sensor 240F, a proximity sensor 240G, a Red, Green, Blue (RGB) sensor 240H, a bio-physical sensor 240I, a temperature/humidity sensor 240J, an illuminance sensor 240K, and an Ultra Violet (UV) sensor 240M. The sensor module 240 can measure a physical property and/or detect an operation state of an electronic apparatus and convert the measured and/or detected information to an electric signal. Additionally/alternatively, the sensor module 240 may include, for example, an olfactory sensor, such as an E-nose sensor, (not illustrated), an Electro MyoGraphy (EMG) sensor (not illustrated), an Electro EncephaloGram (EEG) sensor (not illustrated), an Electro CardioGram (ECG) sensor (not illustrated), a fingerprint sensor, or the like. The sensor module 240 may further include a control circuit for controlling at least one sensor included in the sensor module 240.

The user input module 250 may include a touch panel 252, a pen sensor 254, which may be a digital pen sensor 254, a key 256, and an ultrasonic input device 258. The user input module 250 may be, for example, the user input module 140, as illustrated in FIG. 1. The touch panel 252 may detect a touch input in at least one scheme among, for example, a capacitive scheme, a resistive scheme, an infrared scheme, and an acoustic wave scheme. Further, the touch panel 252 may further include a controller (not illustrated). In the case of the capacitive scheme, the touch panel can recognize an indirect touch as well as a direct touch. A direct touch scheme may refer to a scheme in which a conductive object, e.g. a finger and/or a stylus pen makes a direct contact with a touch screen. According to an embodiment, an indirect touch scheme may refer to a scheme in which a conductive material wrapped by a non-conductive material, e.g. a finger wearing a glove, approaches a touch screen and/or the non-conductive material, e.g. a glove which a finger is wearing, contacts the touch screen. According to an embodiment, the indirect touch scheme may refer to a scheme in which a finger touches a non-conductive material, e.g. a cover for protecting a touch screen, in contact with an upper surface of the touch screen. According to an embodiment, the indirect touch scheme may refer to a scheme, usually called hovering, in which an event is generated as a finger approaches a touch screen within a predetermined distance without coming into contact with the touch screen. The touch panel 252 may further include a tactile layer (not illustrated). In this event, the touch panel 252 may provide a tactile response to a user. The touch panel 252 may be provided at a screen, i.e. a touch screen, of the display module 260. The touch panel 252 may be implemented as an add-on type in which the touch panel is located on the touch screen, and/or as an on-cell type and/or an in-cell type in which the touch panel is inserted in the display module 260.In an embodiment of the present disclosure, the touch panel 252 receives a touch input for designating a section in the screen displaying a webpage. For example, the touch panel 252 receives: a multi-touch input (e.g., a touch input by two or more fingers) applied onto the screen displaying a webpage; a touch input applied to a spot on the screen for a preset period of time; a touch input of a finger moving on the screen with contacting a certain area, hereafter called a 'sweeping touch input'; and a touch input for drawing a closed curve. The touch panel 252 transfers the coordinates of a touch input to the processor 120.

The pen sensor 254 (e.g., a digital pen sensor) may be implemented in the same or a similar way as it receives inputs, e.g., a user's touch input, or may be implemented with a separate recognizing sheet. The key 256 may be, e.g., a keypad or a touch key. The ultrasonic unit 258 is a device for detecting an object in such a way that a pen creates an ultrasonic signal and the microphone of the electronic device senses the ultrasound. The ultrasonic unit 258 may detect an object in wireless mode. In an embodiment, the hardware device 200 may receive a user's inputs from an external device (e.g., a network, a computer or a server) through the communication module 230.

The display module 260 may include a panel 262 and/or a hologram 264. The display module 260 may be, for example, similar to the display module 150 as illustrated in FIG. 1. For example, the panel 262 may be a Liquid Crystal Display (LCD) and/or an Active Matrix-Organic Light Emitting Diode (AM-OLED). The panel 262 may be implemented to be, for example, flexible, transparent, and/or wearable. The panel 262 may be configured by the touch panel 252 and one module. The hologram 264 may show a three dimensional image in the air by using an interference of light. According to an embodiment, the display module 260 may further include a control circuit for controlling the panel 262 and/or the hologram 264.

In an embodiment of the present disclosure, the display module 260 outputs user pages under the control of the processor 120. User pages may be output in various modes. For example, the display module 260 may output a user page on a new window other than a window outputting a current webpage, under the control of the processor 120. In addition, the display module 260 may also output a user page in a pop-up window or in multi-windows, under the control of the processor 120.

When a user designates a section on the screen outputting a webpage by applying a touch input, the display module 260 displays it under the control of the processor 120, so that the user can recognize it. As a first example, when a section on the screen is touched by a user's input, e.g., a touch input by two or more fingers, a touch input applied to a spot for a preset period of time, and a sweeping touch input, the display module 260 may output the section, differing from the other areas, in color, shape or form, under the control of the processor 120. As a second example, the display module 260 may output a user's designated section on the screen so that it is shaded, differing from the other areas, or the boundary of the section is highlighted. As a third example, when the display module 260 receives a touch input drawing a closed curve, it may output a track of the closed curve according to the touch input under the control of the processor 120. As a fourth example, the display module 260 may output a preview screen for the user's designated section under the control of the processor 120. The preview screen may be displayed as the user's designated section is captured. In addition, the display module 260 may also output a menu for keeping, cancelling or managing the designation of the designated section on one side of the screen displaying the web page, under the control of the processor 120.

The interface 270 may include, for example, a High-Definition Multimedia Interface (HDMI) 272, a Universal Serial Bus (USB) 274, a projector 276, and a D-subminiature (D-sub) 278. Additionally or alternatively, the interface 270 may include, for example, a SD drive, a Multi-Media Card (MMC), (not illustrated) and/or an Infrared Data Association (IrDA) interface (not illustrated).The audio codec 280 can bilaterally convert a voice and an electrical signal to each other. The audio codec 280 may convert voice information input and/or output through, for example, a speaker 282, a receiver 284, an earphone 286, and/or the microphone 288. The camera module 291 is a device capable of photographing a still image and a moving image, and may include at least one image sensor, e.g., a front lens and/or a rear lens, an Image Signal Processor (ISP) (not illustrated), and/or a flash LED (not illustrated) according to an embodiment.The power management module 295 can manage power of the hardware 200. Although not illustrated, the power management module 295 may include, for example, a Power Management IC (PMIC), a charger IC, and/or a battery gauge.The PMIC may be mounted in, for example, an IC and/or an SoC semiconductor. Charging methods may be classified into a wired charging method and a wireless charging method. The charger IC can charge a battery and can prevent introduction of over-voltage and/or over-current from a charger. According to an embodiment, the charger IC may include a charger IC for at least one of the wired charging method and the wireless charging method. A magnetic resonance scheme, a magnetic induction scheme, and/or an electromagnetic scheme can be exemplified as the wireless charging method, and an additional circuit for wireless charging, such as a coil loop circuit, a resonance circuit, a rectifier circuit, and the like may be added.

The battery gauge can measure, for example, a residual quantity of the battery 296, and a voltage, a current, and/or a temperature during the charging. The battery 296 can supply power by generating electricity, and may be, for example, a rechargeable battery. The indicator 297 may display a specific state, for example, a booting state, a message state, and/or a charging state of the hardware 200 and/or a part of the hardware, e.g., the AP 211. The motor 298 can convert an electrical signal into a mechanical vibration.

Although it is not shown, the hardware device 200 may include a processor for supporting mobile televisions, e.g., a graphic processing unit (GPU). The processor may process media data that comply with standards of digital multimedia broadcasting (DMB), digital video broadcasting (DVB), media flow, etc. Each of the elements/units of the hardware device according to the present disclosure may be implemented with one or more components, and be called different names according to types of electronic devices. The hardware device according to the present disclosure may include one or more elements described above. The hardware device may be modified in such a way as to: remove part of the elements or include new elements. In addition, the hardware device may also be modified in such a way that parts of the elements are integrated into one entity that performs their original functions.

The term "module" used in the present disclosure may refer to, for example, a unit including at least one combination of hardware, software, and firmware. The "module" may be interchangeably used with a term, such as unit, logic, logical block, component, and/or circuit. The "module" may be a minimum unit of an integrally configured article and/or a part thereof. The "module" may be a minimum unit performing at least one function and/or a part thereof. The "module" may be mechanically and/or electronically implemented. For example, the "module" according to the present disclosure may include at least one of an Application-Specific ICt (ASIC) chip, a Field-Programmable Gate Arrays (FPGA), and a programmable-logic device for performing operations which has been known and/or are to be developed hereinafter.

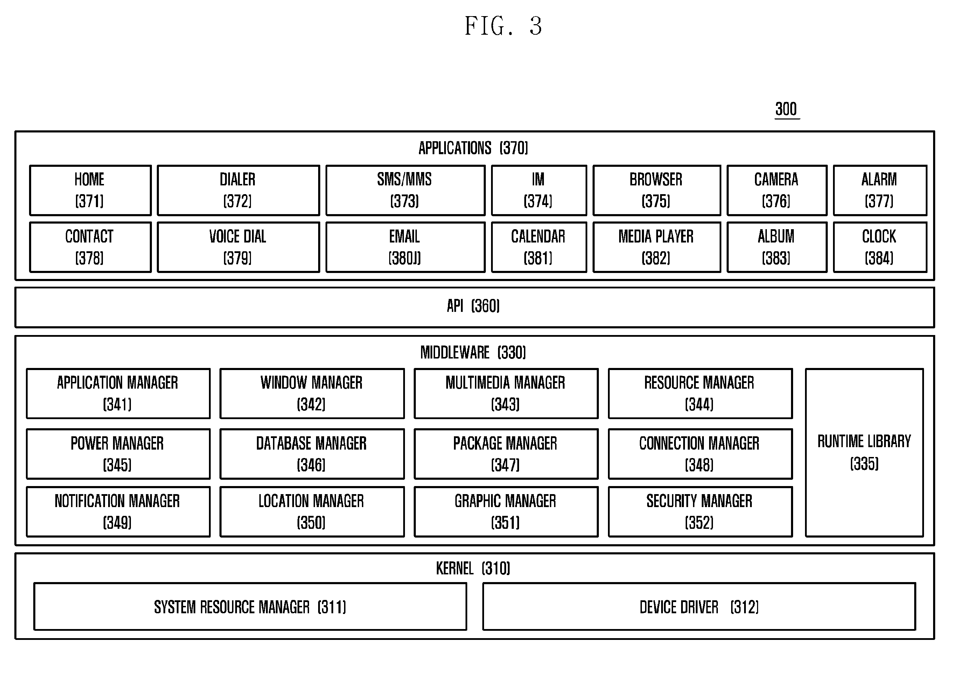

FIG. 3 is a block diagram of an example of a programming module 300, according to aspects of the disclosure. The programming module 300 is included (or stored) in the electronic device 100 (e.g., the memory 130) shown in FIG. 1. Part of the programming module 300 may include software, firmware or hardware, or a combination thereof. The programming module 300 may be implemented in hardware (e.g., the hardware device 200) and may include an operating system (OS) for controlling resources related to an electronic device (e.g., the electronic device 100) or applications operated under the OS (e.g., an application module 370). Examples of the OS are Android, iOS, Windows, Symbian, Tizen, Bada, etc. Referring to FIG. 3, the programming module 300 includes a kernel 310, a middleware 330, an application programming interface (API) 360, and application module 370.

The kernel 310 (corresponding to the kernel 131 shown in FIG. 1) includes a system resource manager 311 and a device driver 312. The system resource manager 311 includes a process management unit 313, a memory management unit 315 and a file system management unit 317. The system resource manager 311 may perform control, assignment or withdrawal of system resources. The device driver 312 includes a display driver 314, a camera driver 316, a Bluetooth driver 318, a sharing memory driver 320, a USB driver 322, a keypad driver 324, a Wi-Fi driver 326, an audio driver 328, etc. In an embodiment, the device driver 312 may also include an inter-process communication (IPC) driver.

The middleware 330 includes a number of modules for providing functions that applications of the application module 370 need in common. The middleware 330 provides the functions via the API 360 so that the application module 370 can efficiently use limited system resources in the electronic device. For example, as shown in FIG. 3, the middleware 330 (corresponding to the middleware 132 shown in FIG. 1) may include one or more of the following: runtime library 335, application manager 341, window manager 342, multimedia manager 343, resource manager 344, power manager 345, database manager 346, package manager 347, connectivity manager 348, notification manager 349, location manager 350, graphic manager 351, security manager 352.

The runtime library 335 includes library modules that a compiler uses to add new functions via a programming language while the applications of the application module 370 are executed. In an embodiment, the runtime library 335 performs the inputting/outputting operation, memory management, arithmetic functions, etc.

The application manager 341 manages life cycles of one or more applications of the application module 370. The window manager 342 manages GUI resources on the screen. The multimedia manager 343 detects the formats for playing back media files. The multimedia manager 343 encodes or decodes media files via a codec corresponding to the detected format. The resource manager 344 manages resources such as memory, storage, source codes of one or more applications of the application module 370, etc.

With the operation of the basic input/output system (BIOS), etc., the power manager 345 manages the battery or electric power supply and provides information about electric power required for operation. The database manager 346 creates, retrieves or updates a database that will be used in one or more applications of the application module 370. The package manager 347 installs or updates applications distributed in the form of package file.

The connectivity manager 348 manages wireless connectivity, such as Wi-Fi connectivity, Bluetooth connectivity, etc. The notification manager 349 shows or notifies users of events such as a message arrival, a schedule, a proximity notification, etc., in a way so as not to disturb the users. The location manager 350 manages location information about the electronic device. The graphic manager 351 manages graphic effects provided to users or the graphic user interface related to the effects. The security manager 352 provides security functions for system security or user authentication. In an embodiment, if the electronic device (e.g., electronic device 100) has been equipped with a phone function, the middleware 330 may further include a telephony manager for managing a voice/video call function.

The middleware 330 may further include new middleware modules created by combining their modules listed above, based on their functions. The middleware 330 may provide modules characterized according to types of operating systems in order to provide particular functions. The middleware 330 may be modified in such a way as to adaptively remove part of their modules or include new modules. Part of the components listed in the embodiments of the present disclosure may be removed or replaced with other components that have the similar functions as the parts but different names. The embodiments may further include new components.

The application programming interface (API) 360 (e.g., API 133 shown in FIG. 1) is a set of API programming functions. The API 360 may be configured according to types of operating systems (OSs). For example, Android or iOS may offer a set of API according to platforms. Tizen may offer two or more sets of APIs.

The application module 370 (e.g., corresponding to the application module 134) includes a preloaded application or a third party application.

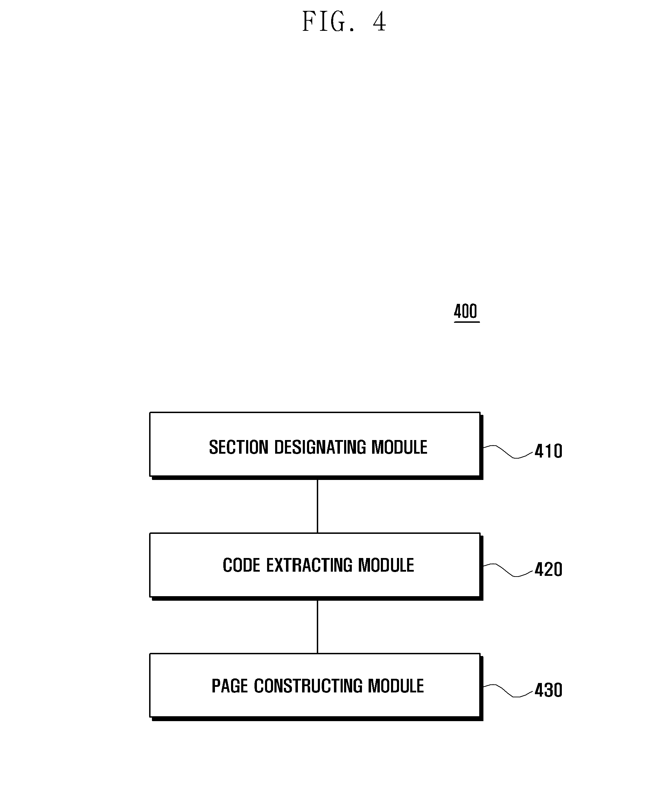

FIG. 4 is a block diagram of a programming module 400, according to aspects of the disclosure.

Referring to FIG. 4, the programming module 400 is included (or stored) in the electronic device 100 (e.g., the memory 130) shown in FIG. 1. Part of the programming module 400 may include software, firmware or hardware, or a combination thereof. The programming module 400 includes a section designating module 410, a code extracting module 420 and a page constructing module 430.

The section designating module 410 designates a section for extracting code data to construct a user page, based on information about a touch input applied to the touch panel 252. The section designating module 410 receives information about a touch input, e.g., coordinates of a touch input, from the touch panel 252. The section designating module 410 identifies coordinates of the touch input, the duration of the touch input, and a displacement of the touch input by analyzing the coordinates of the touch input, etc. The section designating module 410 processes the coordinates, the duration of the touch input, and the displacement of the touch input, and determines whether the touch input is an input to designate a section to extract code data constructing a user page. When the section designating module 410 ascertains that the received touch input is an input to designate a section, it designates a section based on the touch input. The section designating module 410 may further include an area within a preset error range in order to designate a section.

In an embodiment of the present disclosure, the section designating module 410 may designate a section based on information about a touch input by two or more fingers, transferred from the touch panel 252. For example, when a user's two fingers simultaneously touch spots (or region) on text or images in a webpage on the screen, the region including the spots including text or images may be designated as a section to extract code data constructing a user page. When the user touches spots on the screen with the two fingers and moves one or two of them to other spot(s) without losing the contact, the section designating module 410 may designate a section with an extended or reduced area as the one or two fingers move. Although in the present example a section is designated by using touch inputs by two or more fingers, transferred from the touch panel 252, it should be understood that the present disclosure is not limited to the present example alone. For instance, it may be modified in such a way that, when a function of one finger applying a touch input to text or an image on a webpage on the screen has not been defined, e.g., as a function of copying the touched text or image, etc., a section may be designated by one finger's touch input.

In another embodiment of the present disclosure, the section designating module 410 may designate a section based on information about a touch input that is applied to a spot for a preset period of time, transferred from the touch panel 252. For example, when a user's touch input is kept to a spot in text or an image in a webpage on the screen, the section designating module 410 may designate a section to extract code data constructing a user page, by extending the area from the spot to which the touch input is applied according to the duration of the touch input. The section designating module 410 may designate a section by extending the area from the spot to which the touch input is applied in a preset direction. For example, the section designating module 410 may designate a section in such a way that the area is extended from the spot to which the touch input is applied to one of the edges of the screen. In some implementations, the area may be extended in one or both of the top and bottom directions on the screen outputting a webpage.

In another embodiment of the present disclosure, the section designating module 410 may designate a section based on information about a touch that is sweeping the screen, or a sweeping touch input, transferred from the touch panel 252. For example, when a user touches a spot on text or an image on a webpage on the screen with the finger and moves it to another spot without losing the contact, the section designating module 410 designates the touched area as a section.

In another embodiment of the present disclosure, the section designating module 410 may designate a section based on information about a touch that is drawing a closed curve on the screen, transferred from the touch panel 252. For example, when a user applies a touch drawing a closed curve on a webpage on the screen with the user's finger or an electronic pen, the section designating module 410 designates the area by the closed curve as a section. When a section to extract code data constructing a user page is designated, the processor 120 controls the display module 260 to display it, differing from the other areas on the screen. For example, the processor 120 may control the display module 260 to display a section, differing from the other areas, in color, shape or form, based on a user's inputs, i.e., a touch input by two or more fingers, a touch input applied to a spot for a preset period of time, a sweeping touch input, and a touch input defining (or drawing) a closed curve. For example, the processor 120 may control the display module 260 to display a section designated on a webpage on the screen so that it is shaded, differing from the other areas, or the boundary of the section is highlighted. When the processor 120 receives a touch input drawing a closed curve, it controls the display module 260 to output a track of the closed curve.

In an embodiment of the present invention, the processor 120 may receive a touch input to distinguish the touch input for designating a section from the other preset touch inputs. For example, when a user inputs a touch input by two or more fingers, a touch input applied to a spot for a preset period of time, a sweeping touch input, or a touch input drawing a closed curve and then holds the touch input at the final spot for a certain period of time before removing the touch input, the processor 120 sets the section to be designated.

The code extracting module 420 extracts code data corresponding to the designated section. In some implementations, the code data corresponding to the designated section may be one or more lines of code, which when rendered, cause the entire (or at least a portion of) designated section to be displayed. For example, the code extracting module 420 extracts code data corresponding a section designated by a touch input, from source code data constructing a webpage output on the screen. That is, the code extracting module 420 detects the code data positions where text or an image included in a section starts and ends, and extracts code data between the code data start and end positions. The extracted code data includes text-related code data (e.g. HTML code), paths where output images or audio are located, code data about links with other webpages, etc. It should be understood that the present invention is not limited to the extracted code data listed above. For example, the extracted code data may also include all code data necessary for rendering the section. As a section includes an area within a preset error range, the code extracting module 420 may also extract code data within an error range, from an area within the error range, included in the section.

The page constructing module 430 constructs a user page based on the extracted code data. The page constructing module 430 edits the extracted code data from the code extracting module 420 and constructs a user page by using the edited code data. In some aspects, editing the code data may include adding may include adding end tags that are missing. For example, for each start tag in the code that is missing an end tag, the code extracting module may add an end tag. Additionally or alternatively, in some aspects, editing the code data may include encapsulating the code data (or portions thereof) into a new tag pair. For example, when HTML is used, the entire code data may be encapsulated in a "<body" - </body>" tag.

For example, when code data of a currently output webpage and a section is created by HTML, the page constructing module 430 checks tags in the extracted code data and the tag attributes, and adds a start tag '< >' or an end tag '</>' thereto or cuts it off therefrom. When the extracted code data needs an end tag '</>', the page constructing module 430 adds it thereto to meet the context. In addition, the page constructing module 430 checks a parent tag and a child tag in the extracted code data, and adds it thereto or cuts it off therefrom to meet the context. When a parent tag is a table tag to form a table and a child tag is a TR tag or TD tag and when the extracted code data includes a start tag of a table tag, and start and end tags of a TR tag or TD tag, the page constructing module 430 may add the end tag '</TR>' of the table tag to the code data. According to extracted code data, the page constructing module 430 may also add a body tag as a parent tag for the table tag, etc., thereto. In another embodiment of the present disclosure, when user pages have been written and stored, the page constructing module 430 may re-construct user pages including the stored user pages.

For example, when the page constructing module 430 receives a user's touch input and designates a section based on the user's input, it may load code data of at least one of previously written user pages and previously read user pages from the memory 220. The page constructing module 430 may re-construct at least one of the previously written user pages and previously read user pages by combining the code data of at least one of the previously written user pages and the previously read user pages with code data corresponding to the newly designated section.

In an embodiment of the present disclosure, the processor 120 controls the display module 260 to output the first written user page and a user page re-constructed based on the first written user page. Outputting a user page is performed in various modes. For example, the processor 120 controls the display module 260 to output a user page on a new window other than a window outputting a current webpage. The processor 120 controls the display module 260 to output a user page on a pop-up window or on multi-windows.

In an embodiment, the electronic device 200 includes: a display module 260 for outputting an electronic document and receiving an input applied to a screen outputting the electronic document; and a processor 120 for designating a section with a preset size of area on the screen, based on the input, extracting code data from the designated section, and constructing a page based on the extracted code data.

In an embodiment, the input includes one or more of: a plurality of touches; an input applied to a spot on the screen for a preset period of time; an input moving on the screen, keeping an area greater than a preset size; and an input drawing a closed curve on the screen.

In an embodiment, the processor 120 receives an input applied to the screen for a predefined period of time to designate the section.

In an embodiment, the processor 120 controls the display module 260 to output a preview screen for the designated section and to output a menu for keeping, cancelling or managing the designation for the section.

In an embodiment, the processor 120 controls the display module 260 to output the designated section, differing from the other areas in color, shape or form.

In an embodiment, the processor 120 determines, when the input includes a plurality of touches, the section according to the spots on the screen, to which the inputs are applied in two or more input modes.

In an embodiment, the processor 120 determines, when the input is an input applied to a spot on the screen for the duration of the input, controls a range of area of the section according to the duration of the input.

In an embodiment, the processor 120 further extracts code data corresponding to a predefined error range.

In an embodiment, when the electronic document is a web page, the processor 120 edits the extracted code data by adding or removing tags to or from the extracted code and constructs the web page.

In an embodiment, the processor 120 controls the display module 260 to output the constructed page on one or more of the following: a new window, multi-windows, and a pop-up window.

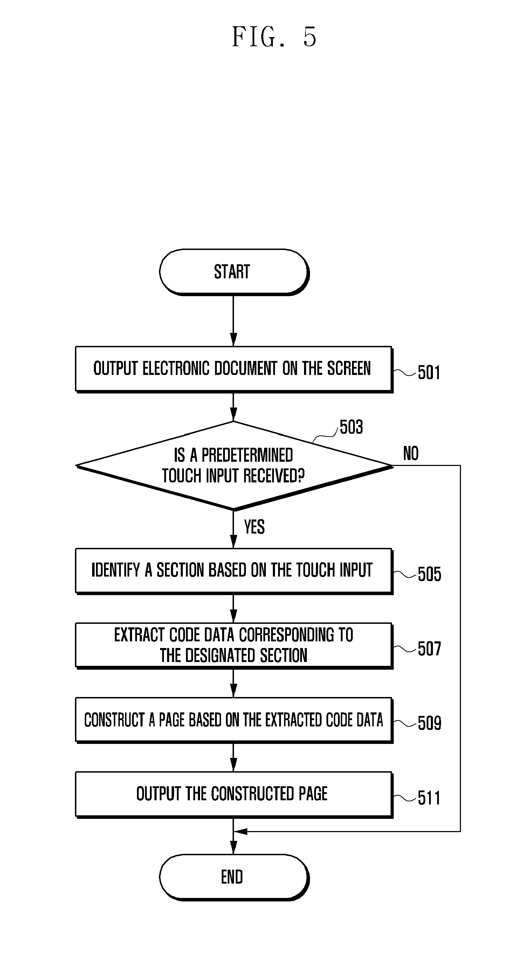

FIG. 5 is a flowchart of an example of a process for constructing pages, according to aspects of the disclosure.

In operation 501, the processor 120 controls the display module 260 to output an electronic document, e.g., a webpage, on the screen. In the disclosure, the electronic document refers to any type of document including contents that are created or output in an electronic form, e.g., text, images, webpages, etc.

In operation 503, the processor 120 determines whether a predetermined touch input is received a . For example, the input may include a touch input applied to on the screen for a preset period of time; a sliding touch input; or a touch input defining (or drawing) a closed curve, from the touch panel 252. The processor 120 checks coordinates of the touch input transferred from the touch panel 252, the duration of the touch input or a displacement of the touch input, based on the coordinates of the touch input, etc. The processor 120 determines whether the touch input is an input to designate a section, based on the coordinates, the duration of the touch input, and the displacement of the touch input. In some implementations, the predetermined input may be any touch input (e.g., gesture) that is not associated with a specific function (e.g. copy/paste function).

In operation 505, the predetermined touch input is received, the processor identifies a section of the electronic document that is selected via the touch input. In an embodiment of the present disclosure, , when a user's two fingers simultaneously touch spots on text or images in a webpage on the screen, the region including the spots including text or images may be designated as a section to extract code data constructing a user page. When the user touches spots on the screen with the two fingers and moves one or two of them to other spot(s) without losing the contact, the section designating module 410 may designate a section with an extended or reduced area as the one or two fingers move..

In another embodiment of the present disclosure, the processor 120 may designate a section based on information about a touch input that is applied to a spot for a preset period of time, transferred from the touch panel 252. For example, when a user's touch input is kept to a spot in text or an image in a webpage on the screen, the processor 120 may designate a section to extract code data constructing a user page, by extending the area from the spot to which the touch input is applied according to the duration of the touch input. The processor 120 may designate a section by extending the area from the spot to which the touch input is applied in a preset direction. For example, the processor 120 may designate a section in such a way that the area is extended from the spot to which the touch input is applied in one or both of the top and bottom directions on the screen outputting a webpage.

In another embodiment of the present disclosure, the processor 120 may designate a section based on information about a sliding gesture performed across the screen. For example, when a user touches a spot on text or an image on a webpage on the screen and moves it to another spot without losing the contact, the processor 120 designates the touched area as a section.

In another embodiment of the present disclosure, the processor 120 may designate a section based on information about a touch that is drawing a closed curve on the screen, transferred from the touch panel 252. For example, when a user applies a touch drawing a closed curve on a webpage on the screen with the finger or an electronic pen, the processor 120 designates the area by the closed curve as a section. The processor 120 may further include an area within a preset error range in order to designate a section. As an area within a preset error range is included in a section, the processor 120 prevents, when the section is touched, code data in any part of the area in the section from being excluded.

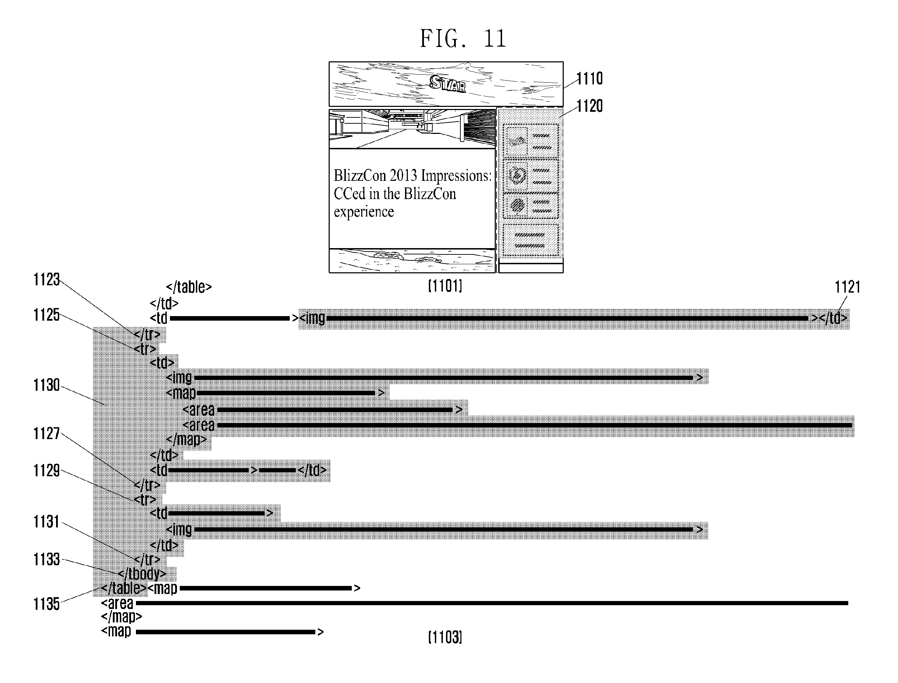

In operation 507, the processor 120 extracts code data corresponding to the identified section. In some implementations the processor may select one or more content items that are associated with the section. Each of the content items may need to be situated, at least in part in the section in order for it to be selected. Each of the content items may include an image, a line of text, a paragraph of text, and/or any other suitable object that is displayed when the webpage is rendered. After the one or more content items are selected, for each content item, the processor 120 may identify a respective code object. Each code object may include one or more lines of code which when executed cause the code object's respective content item to be displayed. For example, the code object may be a line of HTML code (including a start tag, an end tag, and content situated between the start tag and end tag), which when rendered results in a corresponding content item being displayed (e.g., code data 1121, shown in FIG. 11). For example, the processor 120 extracts code data corresponding a section designated by a touch input, from source code data constructing a webpage output on the screen. That is, the processor 120 detects the code data positions where text or an image included in a section starts and ends, and extracts code data between the code data start and end positions. The extracted code data includes text-related code data, paths where output images or audio are located, code data about links with other webpages, etc. It should be understood that the present invention is not limited to the extracted code data listed above. In operation 509, the processor 120 constructs a user page based on the extracted code data. The processor 120 edits the extracted code data from the code extracting module 420 and constructs a user page by using the edited code data. As an example of the embodiments, when code data of a currently output webpage and a section is created by HTML, the processor 120 checks tags in the extracted code data and the tag attributes, and adds a start tag '< >' or an end tag '</>' thereto or cuts it off therefrom. When the extracted code data needs an end tag '</>', the processor 120 adds it thereto to meet the context. In addition, the processor 120 checks a parent tag and a child tag in the extracted code data, and adds it thereto or cuts it off therefrom to meet the context. When a parent tag is a table tag to form a table and a child tag is a TR tag or TD tag and when the extracted code data includes a start tag of a table tag, and start and end tags of a TR tag or TD tag, the processor 120 may add the end tag '</TR>' of the table tag to the code data. According to extracted code data, the processor 120 may also add a body tag as a parent tag for the table tag, etc., thereto. In another embodiment of the present disclosure, when user pages have been written and stored, the processor 120 may re-construct user pages including the stored user pages. For example, when the processor 120 receives a user's touch input and designates a section based on the user's input, it may load code data of at least one of previously written user pages and previously read user pages from the memory 220. The processor 120 may re-construct at least one of the previously written user pages and the previously read user pages by combining the code data of at least one of the previously written user pages and the previously read user pages with code data corresponding to the newly designated section.

In operation 511, the processor 120 controls the display module 260 to output the first written user page and a user page re-constructed based on the first written user page. Outputting a user page is performed in various modes. For example, the processor 120 controls the display module 260 to output a user page on a new window other than a window outputting a current webpage. The processor 120 controls the display module 260 to output a user page on a pop-up window or on multi-windows.

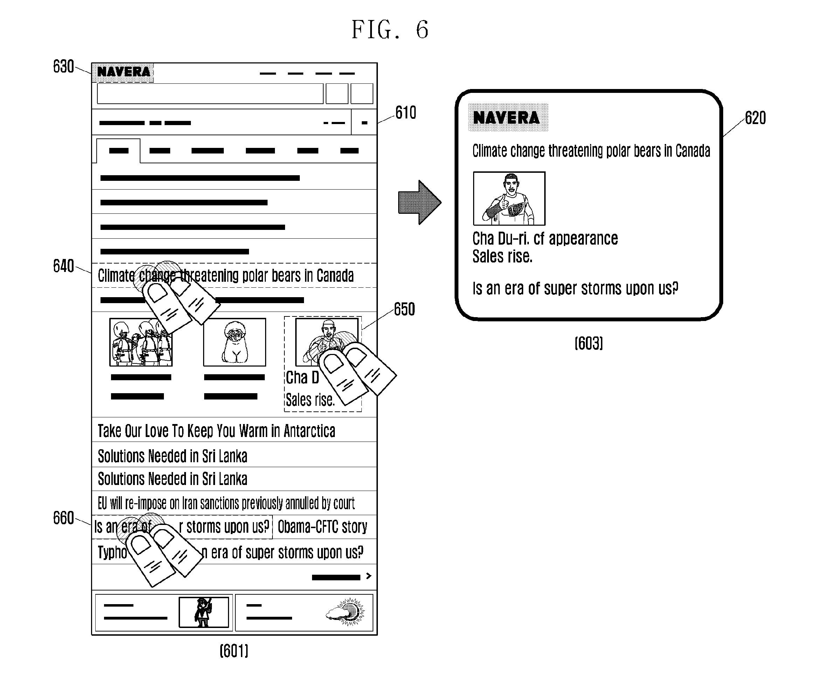

FIG. 6 is a diagram illustrating an example of a process for constructing pages, according to aspects of the disclosure.

Referring to FIG. 6, diagram 601 shows a screen 610 displaying a webpage and a screen 620 displaying a user page that is generated in response to a user selection of a portion of the web page. When a user touches the web page screen 610 with the two fingers, the touch panel 252 transfers information about the spots (or regions) touched by the user's fingers to the processor 120. The processor 120 selects a section from the webpage based on the information from the touch panel 252. For example, as shown in diagram 601 of FIG. 6, the processor 120 receives touch inputs by the two fingers and selects sections 640, 650, and 660 as sections for extracting code data for. The processor 120 extracts code data corresponding to the sections 640, 650, and 660, respectively, and outputs a user page screen 620 constructed based on the extracted code data as shown in diagram 603. Notably, when the user touches only the image in the section 650, the processor 120 may nonetheless select the entire section (including the text of the image).

In some implementations, the processor may extract a predetermined type of data from the web page that does not correspond to any of the section(s) selected in response to the user input. For example, when the processor 120 extracts one or two types of code data from the same webpage and constructs a user page, it may extract a logo image representing the title of the webpage or text information include in code data <TITLE>, e.g., letters 'NEVERA,' and may display it. For example, as shown in diagram 601 of FIG. 6, the processor 120 designates the area 630 including an image for the title of the webpage as a section. As illustrated, the processor 120 displays a user page screen 620 that includes an image for the title of the webpage and is constructed based on code data extracted from the designated areas 640, 650 and 660.

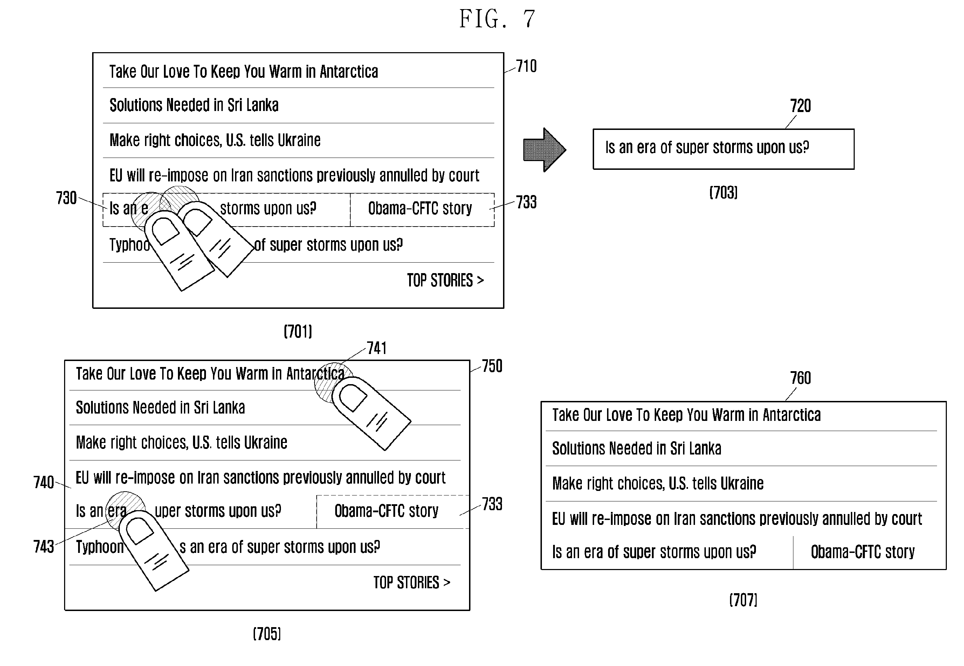

FIG. 7 is a diagram illustrating another example of a process for constructing pages, according to aspects of the disclosure.

Referring to FIG. 7, diagrams 701 and 705 show screens 710 and 750 displaying webpages where sections are selected by two fingers, respectively. Diagrams 703 and 707 show screens 720 and 760 displaying user pages that are constructed based on code data corresponding to the sections 703 and 707, respectively. Although in this aspect touch input is provided with two fingers, in other implementations user input for selecting a particular page section may be provided with three or more fingers or by using one finger only.

As shown in diagram 701 of FIG. 7, when a user touches a part of a section 730 outputting a content item in a webpage with two fingers, the section 730 is selected. In some implementations, if a user touches the section 730, the section 730 including the touched content item is designated as a section for extracting code data; however, the section 733 including the other content item is not designated. Alternatively, in some implementations both of the sections 730 and 733 may be selected based on user input being received in the section 730 only. In other words, in some implementations, the area 733 may be selected based on being adjacent to an area of the web page that is touched by the user (e.g., the area 730).

As shown in diagram 705 of FIG. 7, when the two fingers touch two spots on the screen that are separated from another, the screen 750 may select a section of the webpage that lies between the two spots. As shown in diagram 705 of FIG. 7, when a user touches two spots 741 and 743 with the two fingers, the processor 120 selects the area 740, which lies between the two spots 741 and 743. The processor 120 may designate an area from the row including an object (e.g., text) in the touched spot 741 to the row of the other touched spot 743 as a section for extracting code data. In an embodiment, the area 733, not designated as a section shown in diagram 701, may be included in a section on the screen 760 outputting a user page as shown in diagram 707 of FIG. 7.

When a user touches a part of an area outputting one content item in a webpage with the two fingers, the processor 120 selects a section of the webpage that contains the entire content item (e.g., section 730). When the section is selected, the processor 120 controls the display module 260 to output a user page constructed based on code data corresponding to the selected section (e.g., section 730) as shown in diagram 703 of FIG. 7.

In another embodiment of the present disclosure, when a user touches spots on the screen with the two fingers and moves at least one of the fingers to other spot(s) without losing contact with the screen (e.g., when the user performs a sliding gesture), the processor 120 may expand or reduce the size of the section being selected based on the movement(s) of the finger(s). For example, when the two fingers, adjacent to each other, touch two spots on the screen as shown in diagram 701 of FIG. 7 and then they move apart to spots 741 and 743, without losing the contact, as shown in diagram 705 of FIG. 7, the processor 120 designates a section for extracting code data by extending the range of area from the area 730 to 740. When the section with an extended area is designated, the processor 120 controls the display module 260 to output a user page contracted based on code data for the content item in the area 740 as shown in diagram 707 of FIG. 7.

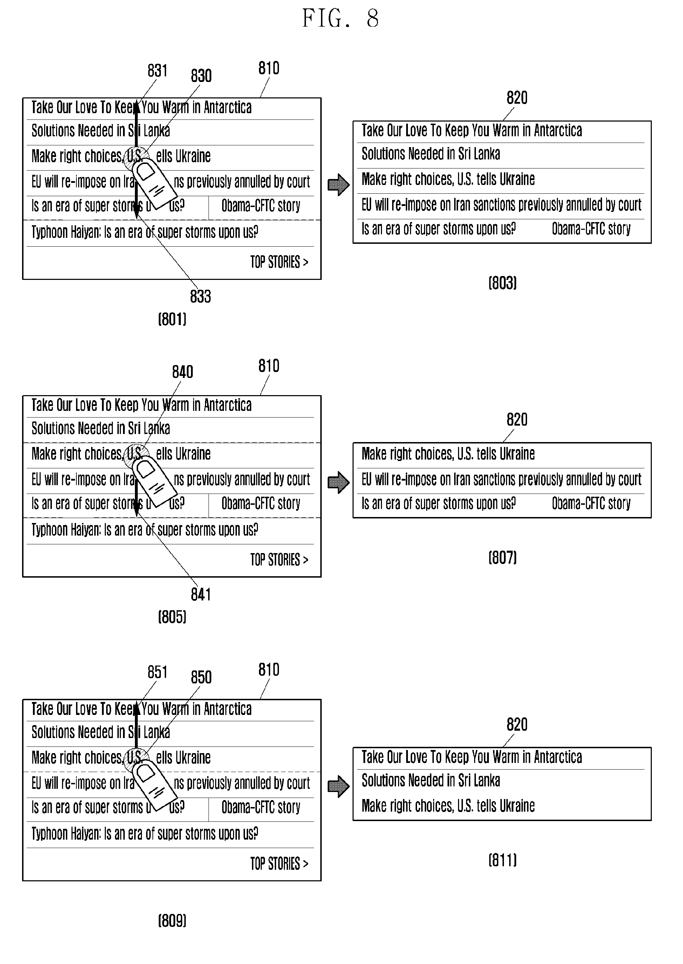

FIG. 8 is a diagram illustrating yet another example of a process for constructing pages, according to aspects of the disclosure.

Referring to FIG. 8, diagrams 801, 803 and 805 show screens 810 where sections are designated based on information about touch inputs applied to spots on a webpage for a preset period of time. Diagrams 803, 807 and 811 show screens 820 outputting user pages constructed based on code data extracted from the sections.

Diagram 801 illustrates an example in which a section of the web page is selected based on duration of a touch input to the screen of the device displaying the webpage. For example, the longer the duration the larger the section might be. As illustrated, the selected section may extend in the directions 831 and 831, such that the location of the touch input lies on a central axis of the selected section. After the section is selected, code data corresponding to the selected section may be extracted from the webpage. Afterwards, as illustrated in diagram 803, a screen 820 may be output that includes a user page that is generated based on the extracted code data. In some implementations, the screen 820 may be displayed automatically (e.g., as a pop-up window) when the user input selecting the section is detected.

As shown in diagram 805 of FIG. 8, when a user applies a touch input to the webpage for a preset period of time, a section may be selected that starts at the location in the webpage where the touch input is received and extends in direction 841. After the section is selected, code data corresponding to the selected section is extracted. Afterwards, as shown in diagram 807 of FIG. 8 a screen 820 is output that contains a user page generated based on the code data.

As shown in diagram 809 of FIG. 8, when a user applies a touch input to the webpage for a preset period of time, a section may be selected that starts at the location in the webpage where the touch input is received and extends in direction 851. After the section is selected, code data corresponding to the selected section is extracted. Afterwards, as shown in diagram 811 of FIG. 8 a screen 820 is output that contains a user page generated based on the code data.

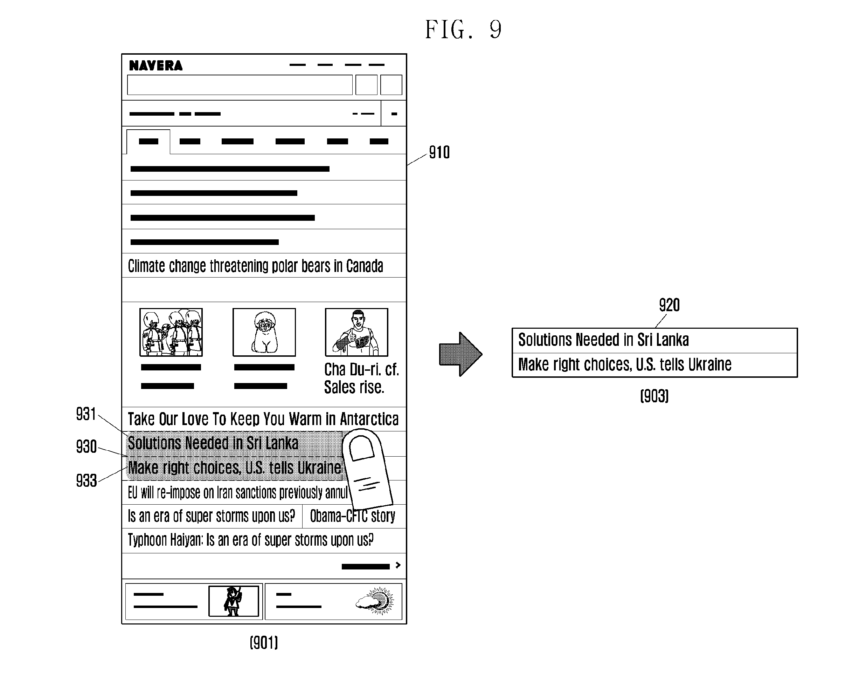

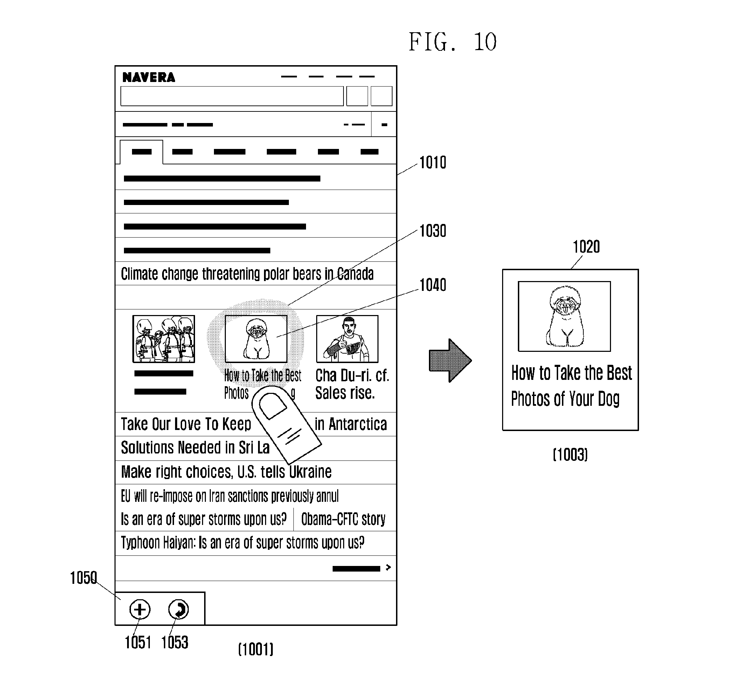

FIG. 9 is a diagram illustrating yet another example of a process for constructing pages, according to aspects of the disclosure. Diagram 901 shows a screen 910 where a section of a webpage is selected based in response to a sliding input. As shown in diagram 901 of FIG. 9, when a user slides the user's finger across the webpage, the processor 120 selects a section of the webpage that includes objects touched by the user's finger (e.g., the objects 931 and 933). In the present example, the objects 931 and 933 are lines of text, but in other examples they may include any suitable type of object, such as an image. After the section is selected, code data corresponding the section may be extracted from the webpage. Afterwards, as illustrated in diagram 902 of FIG. 9 shows a screen 920 may be output that includes a user page that is generated based on the extracted code data. FIG. 10 is a diagram illustrating yet another example of the process for constructing pages, according to aspects of the disclosure. In this example, diagram 1001 shows a screen 1010 outputting a webpage. When user input is received to the webpage that defines a closed curve 1030, a section 140 of the page that is substantially encircled by the closed curve is selected. Furthermore, when the user input is received, the processor 120 may control the display module 260 to output the closed curve 1030, in a color, with a thickness, so that the user can easily recognize it. After the section is selected, the processor 120 may extract code data corresponding to the section. Afterwards, as illustrated in diagram 1003 of FIG. 10 a screen 1020 that includes a user page generated based on the code data.

In an embodiment of the present disclosure, when the processor 120 detects that a section is designated based on a touch input drawing a closed curve 1030, it may control the display module 260 to output a menu 1050 for keeping, cancelling or managing the designation for the section. For example, as shown in diagram 1001 of FIG. 10, the menu 1050 includes a select button 1051 for finalizing the section and a cancel button 1053 for cancelling the selection for the section.

FIG. 11 is a diagram illustrating an example of a document structure, according to aspects of the disclosure.

Referring to FIG. 11, diagram 1101 shows a screen 1110 outputting a webpage where a section 1120 for extracting code data is designated and displayed with a distinguishing mark (e.g., shading), differing from the other areas. Diagram 1103 shows part of the source code data corresponding to the section 1120 that is extracted from the webpage displayed on the screen 1110 shown in diagram 1101. As shown in diagram 1103, the code data extracted from the section 1120 corresponds to the shaded part 1130. In an embodiment of the present disclosure, the reference number 1121 refers to code data that is further included within a preset error range. In an embodiment of the present disclosure, the processor 120 construct a user page by editing the extracted code data, such as by excluding or adding tags of the code data, extracted based on a predefined context, or code data of attributes.The processor 120 may exclude code data of area 1121 and area 1123 in order to construct a user page. That is, since the code data of area 1123 includes an end tag; the code data of area 1121 only includes information about part of the attribute of tag and the end tag; and the code data of area 1125 includes a start tag, the processor 120 may exclude code data of area 1121 and code data of area 1123 according to a predefined context. The embodiment may be modified in such a way as to include code data to add code data of areas 1121 and 1123, instead of excluding code data of areas 1121 and 1123. For example, start tags <td> and <tr> corresponding to the end tag </td> of the code data of area 1121 and the end tag </tr> of the code data of area 1123 may be added to the front of the code data of area 1121.

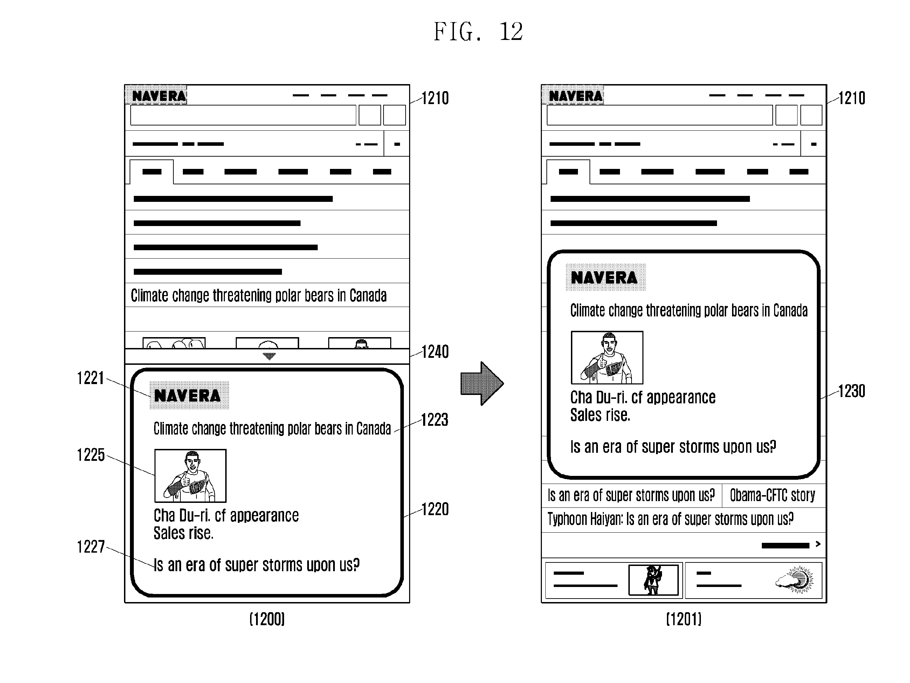

The processor 120 ascertains that the code data of areas 1125 and 1127 correspond to a start tag and an end tag, respectively, and the code data of areas 1129 and 1131 correspond to a start tag and an end tag, respectively. The processor 120 checks code data of area 1133 as the parent tag of the tag of area 1125 and code data of area 1133 as the parent tag of 1133, and adds start tags <tbody> and <table> corresponding to the code data of area 1131 and area 1133, respectively, to the line of code data of area 1125.

In an embodiment, the processor 120 may edit a user page in such a way as to load at least one of a previously written user page a previously read user pages and add new code data to the loaded user page. For example, the processor 120 may edit a user page in such a way as to add new code data between the start tag <body> and the end tag </body> of a body area of the code data in the loaded user page.

FIG. 12 is a diagram illustrating yet another example of a process for constructing pages, according to aspects of the disclosure. As shown in diagram 1200 of FIG. 12, the processor 120 controls the display module 260 to output multi-windows so that a user page screen 1220 is overlaid on the webpage screen 1210. As shown in diagram 1200, the multi-window displays the multi-window size control bar 1240, a content item 1221 indicating the tile of the displayed webpage, and content items 1223, 1225, and 1227, re-constructed based on the extracted code data. As shown in diagram 1201 of FIG. 12, the processor 120 controls the display module 260 to output a pop-up window so that the user page screen 1230 is superimposed or overlaid on the webpage screen 1210.

According to aspects of the disclosure, the webpage constructing method can construct a shortened page from an electronic document, such as a webpage, according to a user's selections, thereby providing use convenience. Furthermore, the webpage constructing method may allow users to select part in an electronic document such as a webpage and to construct a shortened page.

The electronic device 100 may further include various types of modules, for example: a short-range communication module for short-range communication; an interface for transmitting/receiving data in wireless or weird mode; an Internet communication module; and a digital broadcast module for receiving and reproducing broadcasts. With the spread of digital convergence, although it is impossible to list all the modifications of electronic devices in this description, it will be easily appreciated to those skilled in the art that the other components equivalent to the above-listed components may be further included to the electronic device according to the invention. Also, it will be appreciated that, according to the purposes, the electronic device 100 may be implemented by omitting a particular component or replacing it with other components.

FIGS. 1-12 are provided as an example only. At least some of the steps discussed with respect to these figures can be performed concurrently, performed in a different order, and/or altogether omitted. It will be understood that the provision of the examples described herein, as well as clauses phrased as "such as," "e.g.", "including", "in some aspects," "in some implementations," and the like should not be interpreted as limiting the claimed subject matter to the specific examples.

The above-described aspects of the present disclosure can be implemented in hardware, firmware or via the execution of software or computer code that can be stored in a recording medium such as a CD-ROM, a Digital Versatile Disc (DVD), a magnetic tape, a RAM, a floppy disk, a hard disk, or a magneto-optical disk or computer code downloaded over a network originally stored on a remote recording medium or a non-transitory machine-readable medium and to be stored on a local recording medium, so that the methods described herein can be rendered via such software that is stored on the recording medium using a general purpose computer, or a special processor or in programmable or dedicated hardware, such as an ASIC or FPGA. As would be understood in the art, the computer, the processor, microprocessor controller or the programmable hardware include memory components, e.g., RAM, ROM, Flash, etc. that may store or receive software or computer code that when accessed and executed by the computer, processor or hardware implement the processing methods described herein. In addition, it would be recognized that when a general purpose computer accesses code for implementing the processing shown herein, the execution of the code transforms the general purpose computer into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

While the present disclosure has been particularly shown and described with reference to the examples provided therein, it will be understood by those skilled in the art that various changes in form and details may be made therein without departing from the spirit and scope of the present disclosure as defined by the appended claims.

## Claims

1. A method of constructing documents comprising:
displaying a first document on a display screen;
selecting, by a processor, a section of the first document in response to an input;
extracting code corresponding to the section from the first document;
constructing, by the processor, a second document based on the code; and
displaying the second document on the display screen.

2. The method of claim 1, wherein the code corresponding to the section includes code which when executed by the processor causes the section to be displayed.

3. The method of claim 1, wherein the input comprises at least one of:
a gesture that defines a closed curve around the section; and
a sliding gesture and the section is selected based on a direction of the sliding gesture.

4. The method of claim 1, wherein the section is selected based on a duration for which the input is applied to the first document.

5. The method of claim 1, wherein the input is performed in a first location of the document and a second location in the document, and the section is selected based on a distance between the first location and the second location.

6. The method of claim 1, wherein extracting the code includes:
identifying content items displayed in the section; and
for each of the content items, identifying a code object that corresponds to the content item.

7. The method of claim 1, wherein constructing the second document includes identifying in the code an orphaned start tag and inserting an end tag that matches the orphaned start tag.

8. An electronic device comprising a display screen and a processor configured to:
display a first document on the display screen;
select a section of the first document in response to an input;
extract code corresponding to the section from the first document;
construct a second document based on the code; and
display the second document on the display screen.

9. The electronic device of claim 8, wherein the code corresponding to the section includes code which when executed by the processor causes the section to be displayed.

10. The electronic device of claim 8, wherein the input comprises at least one of:
a gesture that defines a closed curve around the section;
a sliding gesture and the section is selected based on a direction of the sliding gesture.

11. The electronic device of claim 8, wherein the section is selected based on a duration for which the input is applied to the first document.

12. The electronic device of claim 10, wherein the input is performed in a first location of the document and a second location in the document, and the section is selected based on a distance between the first location and the second location.

13. The electronic device of claim 10, wherein extracting the code includes:
identifying content items displayed in the section; and
for each of the content items, identifying a code object that corresponds to the content item.

14. The electronic device of claim 10, wherein constructing the second document includes identifying in the code an orphaned start tag and inserting an end tag that matches the orphaned start tag.

15. The electronic device of claim 10, wherein the second document is displayed in a pop-up window.
